(19) Europäisches Patentamt
European Patent Office
Office européen des brevets

(11) Veröffentlichungsnummer: **0 091 086**
**B1**

(12) # EUROPÄISCHE PATENTSCHRIFT

(45) Veröffentlichungstag der Patentschrift: **03.08.88**

(51) Int. Cl.⁴: **F 15 D 1/00**, F 17 D 1/16

(21) Anmeldenummer: **83103151.3**

(22) Anmeldetag: **30.03.83**

(54) **Verfahren zur Verminderung des Reibungswiderstandes in strömenden wässrigen Medien.**

(30) Priorität: **07.04.82 DE 3212969**

(43) Veröffentlichungstag der Anmeldung:
**12.10.83 Patentblatt 83/41**

(45) Bekanntmachung des Hinweises auf die Patenterteilung:
**03.08.88 Patentblatt 88/31**

(84) Benannte Vertragsstaaten:
**BE CH DE FR GB LI NL SE**

(56) Entgegenhaltungen:
**WO - A - 83/01583**
**US - A - 3 361 213**

**JOURNAL OF COLLOID AND INTERFACE SCIENCE, Band 57, Nr. 3, Dezember 1976, NEW YORK(US), S. GRAVSHOLT: "Viscoelasticity in Highly Dilute Aqueous Solutions of Pure Cationic Detergents", Seiten 575-577.**
**Rheol. Acta, 14, 53-60 (1975)**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Ohlendorf, Dieter, Dr., Am Kühlen Grund 4, D-6237 Liederbach (DE)**
Erfinder: **Interthal, Werner, Dr.-Ludwig-Opel-Strasse 62, D-6090 Rüsselsheim (DE)**

**EP 0 091 086 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Es ist allgemein bekannt, dass turbulent strömende Flüssigkeiten an den sie begrenzenden Wänden einen Reibungswiderstand erfahren. Es ist auch bekannt, dass man diesen Reibungswiderstand durch Zusatz geringer Mengen bestimmter Stoffe herabsetzen kann. Stoffe, die diese Wirkung zeigen, werden im englischen Sprachgebrauch als «drag reducing agents» bezeichnet. Im deutschsprachigen Raum wird für diese Stoffe die Bezeichnung «Strömungsbeschleuniger» verwendet (im folgenden abgekürzt durch SB). Unter einem Strömungsbeschleuniger versteht man danach einen Stoff, der in geringer Menge einer turbulent oder pulsierend strömenden Flüssigkeit zugesetzt, diese Flüssigkeit – unter sonst gleichen Bedingungen – schneller strömen lässt. Strömungsbeschleuniger bewirken, dass man mit einer gegebenen Pumpe durch eine gegebene Rohrleitung mehr Flüssigkeit fördern kann.

In vielen Fällen ist allein schon diese Tatsache ein technischer Gewinn, wenn z.B. eine Rohrleitung im Normalbetrieb voll ausgelastet ist und zu bestimmten Zeiten ein Spitzenverbrauch zu fördern wäre. Da mit einer gegebenen Pumpleistung bei der Verwendung von Strömungsbeschleunigern mehr Flüssigkeit gefördert werden kann, wird auch in vielen Fällen die damit verbundene Energieeinsparung einen technischen Vorteil bringen. Schliesslich kann man, wenn man die Durchsatzmenge nicht vergrössern will, bei Verwendung von SB den Druckverlust herabsetzen oder Rohre mit kleinerem Querschnitt verwenden. Beides sind Massnahmen, die die Wirtschaftlichkeit im Betrieb einer Rohrleitung verbessern können.

Als Strömungsbeschleuniger für Wasser oder wässrige Lösungen sind neben hochmolekularen Verbindungen, wie Polyethylenoxid und Polyacrylamid, Lösungen von einigen Tensiden bekannt. Zusätze hochmolekularer Verbindungen besitzen jedoch nur eine beschränkte praktische Einsatzfähigkeit als Strömungsbeschleuniger, da sie in Bereichen hoher Scher- und Dehnbeanspruchung, wie z.B. in Pumpen oder in geringem Mass in der turbulenten Grenzschicht nahe der Rohrwandung, durch mechanischen Abbau irreversibel ihre Wirksamkeit als Strömungsbeschleuniger verlieren. Für geschlossene Wasserkreisläufe, in denen die selbe wässrige Lösung durch ein Rohrleitungssystem ständig umgepumpt wird, sind hochmolekulare Zusätze folglich ungeeignet, da der irreversible mechanische Abbau eine laufende Nachdosierung mit wirksamer hochmolekularer Substanz erforderlich macht.

Zusätze von Tensiden in Wasser weisen bekanntlich nicht den Nachteil des irreversiblen mechanischen Abbaues auf (US-PS 3 961 639). Zwar lässt sich auch hier in Bereichen sehr hoher Dehn- und Scherbeanspruchung, wie z.B. in Pumpen, ein mechanischer Abbau beobachten, der jedoch völlig reversibel ist, sobald die Lösung diese Bereiche passiert hat. So ist die strömungsbeschleunigende Wirkung einer wässrigen Lösung von Na-Oleat bei Zusatz von KCl + KOH oder NaCl + NaOH von Savins beschrieben (Rheol. Acta 6, 323 (1967)). Asslanow et al. (Izv. Akad. Nauk. SSSR, Mekh. Zhidk. Gaza 1, 36–43 (1980)) untersuchten u.a. wässrige Lösungen von Na-Laurat, -Myristat, -Palmitat und -Stearat bei pH = 11 als SB.

Chang et al. (US-PS 3 961 639) beschrieben die strömungsbeschleunigende Wirkung wässriger Lösungen einiger nicht ionischer Tenside mit Fremdelektrolytzusatz bei Temperaturen im Bereich des Trübungspunktes.

Wesentliche Nachteile der genannten Tensidlösungen sind ihre relativ hohen Einsatzkonzentrationen von mindestens 0,25 Gew.-%, die Bildung unlöslicher Seifen mit $Ca^{2+}$ und anderer Kationen, die Ausbildung zweier Phasen, die sich bei längerem Stehen trennen und zu Verstopfungen führen können, die Notwendigkeit der Zugabe von korrosionsfördernden Fremdelektrolyten, sowie ein sehr enger Temperaturbereich von wenigen Grad Celsius, in dem SB-Wirkung auftritt. Von diesen Nachteilen nicht behaftet sind wässrige Lösungen einiger kationischer Tenside, wie z.B. Cetylpyridiniumbromid (Inzh. Fizh. Zh. 38, No. 6, 1031–1037 (1980)) oder Cetyltrimethylammoniumbromid (Nature 214, 585–586 (1967)) in jeweils 1 : 1 molarer Mischung mit α-Naphthol. Neben der schlechten Wasserlöslichkeit des α-Naphthols ist hier als entscheidender Nachteil zu nennen, dass derartige Mischungen ihre Wirksamkeit als SB innerhalb weniger Tage durch chemischen Abbau verlieren (US-PS 3 961 639, Conference Proceeding: Intern. Conference on Drag Reduction, 4.–6. 9. 1974 Rolla Missouri, USA).

Es war auch aus US-A-3 361 213 bekannt, dass Substanzen, die einen viskoelastischen Effekt in Wasser zeigen, sich als Strömungsbeschleuniger eignen. Ein solcher viskoelastischer Effekt war gemäss Journal of Colloid and Interface Science, Bd. 57 (1976), S. 575–577 für Cetyltrimethylammonium-Salicylat, m-Jod- und m-Chlorbenzoat bekannt. Die Verwendung verschiedener quarternärer Ammoniumverbindungen als Strömungsbeschleuniger ist auch aus der Anmeldung WO-A-8 301 583 bekannt.

In Rheol. Acta 14, 53–60 (1975) ist beschrieben, dass ein Salz aus Cetyltrimethylammoniumbromid und Toluolsulfonsäure viskoelastische Eigenschaften hat. Es ist jedoch aus dieser Literaturstelle nicht offensichtlich herzuleiten, dass dieses Salz auch eine Verminderung der Reibung in strömenden wässrigen Medien bewirken kann.

Überraschenderweise wurde nun gefunden, dass zum Unterschied zu allen bisher als SB bekannten Tensiden die nachfolgend aufgeführten Verbindungen in reiner Form auch ohne jegliche Zusätze in wässriger Lösung schon in kleinsten Konzentrationen als Strömungsbeschleuniger wirksam sind.

Gegenstand der Erfindung ist somit ein Verfahren zur Verminderung des Reibungswiderstandes von turbulent oder pulsierend strömenden wässrigen Medien, das dadurch gekennzeichnet ist, dass man dem wässrigen Medium eine Verbindung der Formel

$R_1–K^{\oplus}A^{\ominus}$

zugibt, wobei K eine Gruppe der Formel

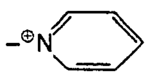 oder $–N^{\oplus}(R_2)_3$,

$R_2$ $C_1–C_3$ Alkyl, vorzugsweise Methyl, A ein Anion der folgenden Formeln

$R_3–COO^{\ominus}$ , $SCN^{\ominus}$ , 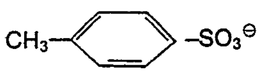

$R_3$ $C_7–C_{10}$-Alkyl oder $C_7–C_{10}$-Alkenyl und $R_1$ für den Fall A = $R_3–COO^{\ominus}$ $C_{16}$-Alkyl oder $C_{16}$-Alkenyl, für den Fall A = Rhodanid $C_{16}–C_{26}$-Alkyl oder $C_{16}$-$C_{26}$-Alkenyl und für den Fall A = p-Toluolsulfonat $C_{12}–C_{26}$-Alkyl oder $C_{12}–C_{26}$-Alkenyl bedeuten, ausgenommen Cetyltrimethylammonium-p-toluolsulfonat.

Besonders bevorzugt sind die Tensid-Salze aus folgenden Kationen und Anionen

1. $[C_{16}H_{33}N(CH_3)_3]^{\oplus}$ oder 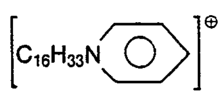

mit den Anionen

$C_xH_{2x+1}COO^{\ominus}$ für $7 \leq x \leq 10$

2. $[C_nH_{2n+1}N(CH_3)_3]^{\oplus}$ oder 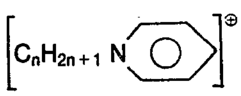

a) mit dem Anion

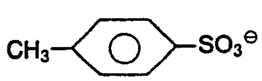 für $12 \leq n \leq 26$

b) mit dem Anion $SCN^{\ominus}$ für $16 \leq n \leq 26$

Die genannten Salze eignen sich zur Verminderung des Reibungswiderstandes von wässrigen Medien. Sie werden zugegeben in Konzentrationen von 0,01 bis 2, vorzugsweise von 0,06 bis 0,6 Gew.-%, wobei jedoch für jedes Salz eine andere untere kritische Konzentrationsgrenze für eine ausreichende Wirksamkeit als SB existiert. Die Wirkung als SB ist ausserdem abhängig von der Temperatur. Je nach eingesetztem Salz wird eine ausreichende Wirkung als SB im Temperaturbereich von 0 °C bis 100 °C und oberhalb 100 °C gefunden. Die untere Temperaturgrenze für einen Einsatz als SB ist bei allen Tensiden die Löslichkeitstemperatur. Ist das Tensid jedoch in Lösung, so kann die Löslichkeitstemperatur einige Stunden bis Wochen, um 5–30 °C unterschritten werden.

Für die n-Alkyltrimethylammonium-rhodanide ($C_nTA$-SCN) wurden folgende Bereiche, in denen die optimale Wirksamkeit als SB auftritt, gefunden:

n-Hexadecyltrimethylammoniumrhodanid im Bereich von 0,02 bis 2 Gew.-%, vorzugsweise von 0,06 bis 0,6 Gew.-% im Temperaturbereich von 45 bis 65 °C; n-Octadecyltrimethylammoniumrhodanid im Bereich von 0,04 bis 2 Gew.-%, vorzugsweise von 0,09 bis 0,9 Gew.-% im Temperaturbereich von 55 bis 75 °C, vorzugsweise von 60 bis 70 °C. Allgemein gilt, dass der Temperaturbereich, in dem eine ausreichende Wirkung als SB vorliegt, mit jeder zusätzlichen $C_2H_4$-Gruppe um ca. 10–15 °C zu höheren Temperaturen verschoben wird. Bei Anwendung der Pyridiniumverbindungen liegt der bevorzugte Temperaturbereich von ca. 5–15 °C niedriger und die erforderlichen Konzentrationen um 1,5 bis 2mal höher gegenüber den Trimethylammoniumverbindungen gleicher Kettenlänge.

Für die n-Alkyltrimethylammonium-p-toluolsulfonate wurden folgende Bereiche optimaler Wirksamkeit als SB gefunden:

n = 12 : 0,1 bis 4 Gew.-%, vorzugsweise 0,3 bis 2 Gew.-% für 0–15 °C.
n = 14 : 0,05 bis 2 Gew.-% für 5 bis 30 °C.
n = 16 : 0,05 bis 2 Gew.-% für 15 bis 45 °C.
n = 18 : 0,05 bis 2 Gew.-% für 30 bis 60 °C.

Ganz allgemein gilt, dass mit jeder zusätzlichen $C_2H_4$-Gruppe eine Verschiebung der optimalen Wirksamkeit als SB um 10–15 °C zu höheren Temperaturen auftritt. Die entsprechenden Pyridiniumverbindungen zeigen Wirksamkeit als SB bei Konzentrationen, die um den Faktor 1,5 bis 2 grösser sind und bei Temperaturen die um 5 bis 15 °C niedriger sind.

Sowohl bei den Toluolsulfonaten als auch bei den Rhodaniden ist eine Wirkung als SB für Temperaturen auch über 100 °C vorhanden in Kombination mit n-Alkyltrimethylammoniumverbindungen mit Kettenlängen von mindestens 20 bis 22 C-Atomen.

Für die Gruppe von Verbindungen der folgenden Struktur $[C_{16}H_{33}N(CH_3)_3]^{\oplus}$ $[CxH_{2x+1}COO]^{\ominus}$ gelten die folgenden optimalen Grenzwerte für die Wirkung als SB:

x = 7 : 0,08 bis 2 Gew.-%, vorzugsweise 0,2 bis 1 Gew.-% von 20 bis 45 °C
x = 8 : 0,05 bis 2 Gew.-%, vorzugsweise 0,1 bis 1 Gew.-% von 20 bis 60 °C
x = 9 : 0,05 bis 2 Gew.-%, vorzugsweise 0,1 bis 1 Gew.-% von 20 bis 70 °C
x = 10 : 0,05 bis 2 Gew.-%, vorzugsweise 0,1 bis 1 Gew.-% von 40 bis 100 °C, vorzugsweise 50 bis 90 °C.

Bei den analogen Pyridiniumverbindungen erhöhen sich die optimalen Grenzwerte bezüglich der Konzentrationen um den Faktor 1,5 bis 2 und erniedrigen sich bezüglich des Temperaturbereichs um 5–15 °C.

Weiter wurde gefunden, dass durch Erhöhung des pH-Wertes der wässrigen Lösung auf pH-Werte über 9, insbesondere auf pH = 10–11, durch Zugabe von NaOH oder anderer Basen oder durch Zugabe von $Na_2CO_3$ oder anderer Salze, die den pH-Wert erhöhen, die Wirksamkeit als SB bei gleicher Tensidkonzentration wesentlich verbessert wird. Auch eine Absenkung des pH-Wertes mit HCl oder anderen starken Säuren auf pH-Werte nicht über 4,5 führt zu einer Verbesserung der Wirksamkeit als SB.

Auch durch die Zugabe anderer Fremdelektrolyte lässt sich eine Verstärkung der Wirkung erreichen. Als solche Fremdelektrolyte kommen in Frage beispielsweise schwache Säuren wie Essigsäure oder Ameisensäure und Salze, die aus den folgenden Ionen gebildet werden: Alkali-, Erdalkali-, Übergangsmetall-, Ammonium- oder Aluminium-Kationen; Halogenide, $ClO_3^{\ominus}$, $ClO_4^{\ominus}$, $BrO_3^{\ominus}$, $JO_3^{\ominus}$, $SO_3^{2\ominus}$, $S_2O_3^{2\ominus}$, $SO_4^{2\ominus}$, $S_2O_8^{2\ominus}$, $NO_2^{\ominus}$, $NO_3^{\ominus}$, $PO_4^{3\ominus}$, $CO_3^{2\ominus}$, $CH_3COO^{\ominus}$, $C_2O_4^{2\ominus}$, $CN^{\ominus}$, $CrO_4^{2\ominus}$, $Cr_2O_7^{2\ominus}$. Die Menge dieser Fremdelektrolyte, die man zur Verstärkung der Wirkung zugeben kann, ist nach oben begrenzt durch die Konzentration, bei der ein Aussalzeffekt für das Tensid auftritt. Nach unten besteht keine Konzentrationsgrenze.

Die Wirkung der Fremdelektrolyte hängt auch ab von der Wertigkeit der Ionen und zwar verschiebt sich die Wirkung zu geringeren Konzentrationen gemäss folgendem Schema: 1-1-wertiger Elektrolyt < 2-1-wertiger Elektrolyt < 1-2-wertiger Elektrolyt < 2-2-wertiger Elektrolyt < 3-2-wertiger Elektrolyt < 2-3-wertiger Elektrolyt. Die Verbesserung der Wirksamkeit als Strömungsbeschleuniger ist besonders effektiv bei Zugabe eines Salzes, das gleichzeitig den pH-Wert auf pH $\geq$ 9,9 anhebt. So wirkt sich z.B. die Zugabe von $Na_2CO_3$ im Konzentrationsbereich $0{,}1.C \leq C \leq 10.C$ besonders positiv aus, wenn C die molare Konzentration des eingesetzten Tensids ist.

Anstelle der Zugabe von Salzen kann man auch so vorgehen, dass man beispielsweise ein Cetyltrimethylammoniumhalogenid bzw. Cetylpyridiniumhalogenid im molaren Verhältnis 1 : 1 mit einem Alkalisalz der das Anion $A^-$ enthaltenden Säure als Strömungsbeschleuniger einsetzt. Die Wirkung ist dann gleich der Wirkung, die man mit den Cetylammoniumsalze der Erfindung unter Zusatz von Alkalihalogeniden erreicht.

Die maximale Wirksamkeit als Strömungsbeschleuniger ist auch von der Zeit abhängig, die verstrichen ist seit der Herstellung der wässrigen Lösungen der Erfindung. Die Tensidlösungen zeigen zwar bereits sofort nach dem Ansetzen der Lösungen eine Wirkung als Strömungsbeschleuniger, doch kann sich diese Wirkung während einer Woche noch deutlich ändern. Die Zeit, die benötigt wird, um eine optimale Wirkung zu erzielen, lässt sich für den Einzelfall unschwer durch einfache Versuche ermitteln. In den meisten Fällen wird die optimale Wirkung nach einer Woche erreicht. Eine Änderung oder Verbesserung der Wirkung tritt dann nicht mehr ein.

Die Untersuchung der genannten Tenside auf ihre Wirksamkeit als SB erfolgte in der üblichen Art, indem für die jeweilige wässrige Lösung der Tenside der Druckabfall $\Delta P$ über die Strecke L bei Durchströmen eines Rohres mit dem Querschnitt d für verschiedene Strömungsgeschwindigkeiten u gemessen wurde. Aus diesen Werten lassen sich die dimensionslosen Grössen, Reibungsbeiwert $\lambda$ und die Reynoldszahl Re, berechnen,

$$\lambda = \frac{2\ d}{\rho\ u^2} \cdot \frac{\Delta P}{L} \qquad Re = \frac{u \cdot d}{\nu}$$

wobei $\rho$ die Dichte und $\nu$ die kinematische Viskosität bedeuten. Üblicherweise werden für $\rho$ und $\nu$ jeweils die entsprechenden Werte des reinen Lösungsmittels, Wasser, eingesetzt. Die so erhaltenen Werte, $\lambda$, Re, für die untersuchten Tensid-Lösungen wurden in der üblichen doppelt logarithmischen Auftragung gegen Re mit den entsprechenden Werten für reines Wasser, wiedergegeben durch

$$1/\sqrt{\lambda} = 2 \log Re\sqrt{\lambda} - 0{,}8$$

verglichen. Eine Wirkung als SB oder auch Reibungsminderung liegt dann vor, wenn gilt: $\lambda_{H_2O} - \lambda_{SB} > O$, bzw. die Grösse der Reibungsminderung in Prozent berechnet sich nach:

$$\alpha = \%\ \text{Reibungsminderung} = \frac{\lambda_{H_2O} - \lambda_{SB}}{\lambda_{H_2O}} \times 100$$

Die genannten Tensidlösungen wirken als SB in der Weise, dass die prozentuale Reibungsminderung mit ansteigender Reynoldszahl zunimmt, dann aber nach Überschreiten einer bestimmten Reynoldszahl, $Re_{max}$, mit maximaler prozentualer Reibungsminderung, sehr schnell wieder abnimmt. Der Grad der Wirksamkeit einer Tensidlösung als SB soll im folgenden Text durch die Grösse von $Re_{max}$ gekennzeichnet werden; demnach besitzt eine Tensidlösung mit $Re_{max}$ = 20 000 eine bessere Wirksamkeit als SB als eine Tensidlösung mit $Re_{max}$ = 10 000. Der zugehörige $\alpha$-Wert soll mit $\alpha_{max}$ gekennzeichnet werden. Die Untersuchungen der Tensidlösungen ergaben nur dann reproduzierbare Ergebnisse, wenn die wässrigen Lösungen der Tensidsalze vor den Messungen jeweils für ca. 1 Woche bei den Messtemperaturen aufbewahrt wurden. Die Lösungen zeigen zwar auch sofort nach dem Ansetzen eine Wirkung als Strömungsbeschleuniger, die sich jedoch im Verlauf einer Woche noch deutlich ändern kann.

Die so vorbehandelten Tenside wurden einer Vielzahl von Tests unterzogen. So ergaben Dauerversuche über mehrere Tage, dass bei den aufgeführten Tensiden keine Abnahme ihrer strömungsbeschleunigenden Wirkung durch mechanischen oder chemischen Abbau auftritt. Weiterhin zeigte sich, dass die Wirksamkeit als SB der genannten Tenside mit zunehmender Konzentration zunimmt; allerdings steigt auch die Viskosität der Lösungen an, so dass die prozentuale Reibungsminderung bei kleineren Reynoldszahlen schlechter wird. Es wurde jedoch auch beobachtet, dass die Temperaturstabilität der genannten Tensidlösungen, d.h. ihre Wirksamkeit als SB bei hohen Temperaturen, mit zunehmender Konzentration ansteigt. Die Temperaturstabilität wird ausser von der Konzentration auch von den Tensiden selbst bestimmt; so zeigten die Versuche, dass der Temperaturbereich, in dem SB-Wirkung auftritt, bei den Pyridiniumverbindungen allgemein etwas niedriger liegt (8–12 °C) als bei den Trimethylammoniumverbindungen.

Die durchgeführten Untersuchungen zeigen, dass sich die genannten Tensid-Salze als Strömungsbeschleuniger überall dort eignen, wo Wasser durch Rohrleitungen gepumpt wird, insbesondere aber dort, wo Wasser in einem Rohrleitungssystem ständig im Kreislauf umgepumpt wird, wie z.B. in Kühlkreisläufen, da hier eine hohe Langzeitstabilität des SB, wie sie die genannten Tensid-Salze aufweisen, unbedingt erforderlich ist. Die Zudosierung der Tensid-Salze in das die Rohrleitungen durchströmende Wasser kann sowohl in Form einer konzentrierten Tensidlösung (1–10 Gew.-%) erfolgen, als auch durch Zugabe der reinen kristallinen Tensid-Salze. Wegen des guten Durchmischungseffektes ist eine Zudosierung in das Rohrleitungssystem kurz vor einer Pumpe der günstigste Ort.

Beispiel 1

Es wurde eine Konzentrationsreihe von 200, 500, 750, 1000, 2000 Gew.-ppm von Hexadecyltrimethylammoniumrhodanid (im folgenden abgekürzt durch CTA-SCN) in E-Wasser angesetzt, indem die entsprechenden Gewichtsmengen von 0,2; 0,5; 0,75; 1,0; und 2 g CTA-SCN auf 1000 g E-Wasser eingewogen werden. Nach dem Auflösen unter Rühren bei Raumtemperatur wurden die Lösungen kurz auf ca. 90 °C erhitzt und nach dem Abkühlen auf 45 °C für 1 Woche bei dieser Temperatur ohne zu Rühren aufbewahrt.

Die Untersuchung auf Reibungsminderung erfolgte anschliessend in einem Turbulenzrheometer (Polymer Letters 9,851 (1971)), indem analog zu einer Spritze eine Flüssigkeitsmenge von 1,5 l mit Hilfe eines Kolbens durch das Messrohr gedrückt wird. Die Bewegung des Kolbens wird während der Messung beschleunigt, so dass die gesamte Fliesskurve in einer Messung erfasst wird. Der Durchmesser des Messrohres beträgt 3 mm, die Messstrecke für $\Delta P$ 300 mm und die Einlaufstrecke 1200 mm.

In dieser Apparatur wurde dieselbe Konzentrationsreihe von CTA-SCN bei 45 °C und 55 °C gemessen, nachdem die Lösung zuvor ebenfalls für 1 Woche bei 55 °C aufbewahrt worden war. Tabelle 1 fasst die Ergebnisse zusammen.

Beispiel 2

Wie in Beispiel 1 beschrieben wurden wässrige Lösungen mit einem Gehalt von jeweils 750 ppm ($2{,}19 \cdot 10^{-3}$ mol/l) CTA-SCN und den folgenden Konzentrationen an $Na_2CO_3$ (in mol/l) angesetzt:

$$1 \cdot 10^{-4};\ 2 \cdot 10^{-4};\ 1 \cdot 10^{-3};\ 1{,}78 \cdot 10^{-3};\ 4 \cdot 10^{-3}$$

In einem zweiten Versuch wurden jeweils 750 ppm Lösungen von CTA-SCN mit NaOH auf pH = 10,8 und mit HCl auf pH = 2,7 eingestellt.

Tabelle 2 fasst die Ergebnisse der Untersuchung auf Reibungsminderung in Turbulenzrheometer bei 45 °C zusammen.

Beispiel 3

Wie in Beispiel 1 beschrieben, wurden Lösungen von Hexadecylpyridiniumrhodanid mit den Konzentrationen 500 und 1000 ppm angesetzt und im Turbulenzrheometer bei 45 °C gemessen. Beide Lösungen zeigten Reibungsminderung und zwar bei 500 ppm mit $RE_{max} = 4400$ und $\alpha_{max} = 53\%$ und bei 1000 ppm mit $Re_{max} = 6400$ und $\alpha_{max} = 54\%$.

Beispiel 4

Wie in Beispiel 1 beschrieben wurden wässrige Lösungen von n-Alkyltrimethylammoniumrhodanid ($C_nTA$-SCN) mit unterschiedlichen Konzentrationen angesetzt, indem äquimolare Mengen der Salze n-Alkyltrimethylammoniumchlorid und Natriumrhodanid eingewogen wurden. Die fertigen Lösungen enthielten also zusätzlich die entsprechenden molaren Mengen an NaCl. Die Ergebnisse der Untersuchung auf Reibungsminderung im Turbulenzrheometer sind in Tabelle 3 zusammengefasst.

Beispiel 5

Wie in Beispiel 1 beschrieben, wurden wässrige Lösungen von n-Alkyltrimethylammonium-p-toluolsulfonat ($C_nTA$-PTS) angesetzt, indem äquimolare Mengen der Salze $C_nTA$ Cl und Natrium-p-toluolsulfonat eingewogen wurden. Die Ergebnisse der Untersuchung auf Reibungsminderung im Turbulenzrheometer sind in Tabelle 4 zusammengefasst.

Beispiel 6

Wie in Beispiel 1 beschrieben, wurden wässrige Lösungen von Hexadecyltrimethylammonium-n-alkylcarboxylat (CTA-$C_xH_{2x+1}COO$) angesetzt, indem äquimolare Mengen der Salze CTA Cl und $C_xH_{2x+1}COO$ Na eingewogen wurden. Die Ergebnisse der Untersuchung auf Reibungsminderung im Turbulenzrheometer sind in Tabelle 5 zusammengefasst.

Tabelle 1
CTA-SCN

| T [°C] | Konzentration [ppm] | $Re_{max}$ | $\alpha_{max}$ [%] |
|---|---|---|---|
| 45 | 200 | 4 100 ± 400 | 57 ± 5 |
| 45 | 500 | 8 500 ± 900 | 57 ± 5 |
| 45 | 750 | 9 300 ± 900 | 57 ± 5 |
| 45 | 1 000 | 12 100 ± 1 200 | 60 ± 6 |
| 45 | 2 000 | 18 800 ± 1 900 | 65 ± 6 |
| 55 | 500 | – | |
| 55 | 750 | 6 300 | 51 ± 5 |
| 55 | 1 000 | 9 900 | 67 ± 6 |
| 55 | 2 000 | 20 400 | 68 ± 6 |

Tabelle 2
Messtemperatur: 45 °C, CTA-SCN-Konz.: 750 ppm

| $Na_2CO_3$-Konz. mol/l | pH | $Re_{max}$ | $\alpha_{max}$ |
|---|---|---|---|
| $1 \cdot 10^{-4}$ | 7,5 | 8 700 ± 900 | 55 ± 5 |
| $2 \cdot 10^{-4}$ | 10,0 | 10 700 ± 1 400 | 58 ± 5 |
| $1 \cdot 10^{-3}$ | 10,3 | 14 600 ± 2 500 | 67 ± 3 |
| $1{,}78\ 10^{-3}$ | 10,6 | 9 100 ± 900 | 66 ± 3 |
| $4 \cdot 10^{-3}$ | 10,8 | – – | |
| HCL-Zusatz | 2,7 | 10 000 ± 1 000 | 63 ± 3 |
| NaOH-Zusatz | 10,8 | 14 400 ± 1 400 | 67 ± 3 |

Tabelle 3
$C_nTA$-SCN + NaCl

| $C_nTA$ | T [°C] | Konz. [ppm] | $Re_{max}$ | $\alpha_{max}$ [%] |
|---|---|---|---|---|
| $C_{18}TA$ | 60 | 500 | 5 400 ± 500 | 31 ± 3 |
| $C_{18}TA$ | 60 | 800 | 6 300 ± 600 | 46 ± 4 |
| $C_{20/22}TA$ | 90 | 300 | 6 500 ± 700 | 61 ± 6 |
| $C_{20/22}TA$ | 90 | 300 | 11 100 ± 1 000 | 64 ± 6 |

$C_nTA$ steht jeweils für $[C_nH_{2n+1}N(CH_3)_3]^+$

Tabelle 4
$C_nTA$-PTS + NaCl

| $C_nTA$ | T [°C] | Konz. [ppm] | $Re_{max}$ | $\alpha_{max}$ [%] |
|---|---|---|---|---|
| $C_{18}TA$ | 40 | 1 000 | 3 600 ± 400 | 41 ± 4 |
| $C_{18}TA$ | 40 | 3 000 | 6 800 ± 700 | 36 ± 3 |
| $C_{20/22}TA$ | 60 | 1 000 | 5 000 ± 500 | 28 ± 3 |

$C_nTA$ steht jeweils für $[C_nH_{2n+1}N(CH_3)_3]^+$

Tabelle 5
CTA-$C_xH_{2x+1}COO$ + NaCl

| $C_xH_{2x+1}COO^-$ | T [°C] | Konz. [ppm] | $Re_{max}$ | $\alpha_{max}$ |
|---|---|---|---|---|
| $C_7H_{15}COO^-$ | 45 | 5 000 | 3 700 ± 400 | 36 ± 3 |
| $C_8H_{17}COO^-$ | 22 | 5 000 | 40 200 ± 4 000 | 73 ± 7 |
| $C_8H_{17}COO^-$ | 60 | 3 000 | 3 500 ± 300 | 41 ± 4 |
| $C_8H_{17}COO^-$ | 60 | 5 000 | 4 700 ± 500 | 35 ± 3 |
| $C_9H_{19}COO^-$ | 22 | 2 000 | 22 900 ± 2 300 | 70 ± 7 |
| $C_{10}H_{21}COO^-$ | 40 | 2 000 | 27 100 ± 2 400 | 45 ± 4 |

**Patentansprüche**

1. Verfahren zur Verminderung des Reibungswiderstandes von turbulent oder pulsierend strömenden wässrigen Medien, dadurch gekennzeichnet, dass man dem wässrigen Medium 0,01 bis 2 Gew.-% einer Verbindung der Formel

$$R_1\text{–}K^+A^-$$

zugibt, wobei K eine Gruppe der Formel

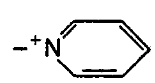 oder $-N^+(R_2)_3$,

$R_2$ $C_1$–$C_3$ Alkyl, vorzugsweise Methyl, A ein Anion der folgenden Formeln

$R_3$–$COO^-$ , $SCN^-$ , 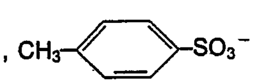

$R_3$ $C_7$–$C_{10}$-Alkyl oder $C_7$–$C_{10}$-Alkenyl und $R_1$ für den Fall A = $R_3$–$COO^-$ $C_{16}$-Alkyl oder $C_{16}$-Alkenyl, für den Fall A = Rhodanid $C_{16}$–$C_{26}$-Alkyl oder $C_{16}$–$C_{26}$-Alkenyl und für den Fall A = p-Toluolsulfonat $C_{12}$–$C_{26}$-Alkyl oder $C_{12}$–$C_{26}$-Alkenyl bedeuten, ausgenommen Cetyltrimethylammonium-p-toluolsulfonat.

2. Verfahren nach Anspruch 1, dadurch gekennzeichnet, dass man zusätzlich durch Zugabe von Säuren oder Basen einen pH-Wert bis zu 4,5 bzw. oberhalb von 9 einstellt.

3. Verfahren nach Anspruch 1, dadurch gekennzeichnet, dass man zusätzlich noch Alkali-, Erdalkali-, Übergangsmetall-, Ammonium- oder Aluminium-Salze zugibt.

**Claims**

1. A process for reducing the drag of aqueous media in turbulent or pulsating flow, which comprises adding to the aqueous medium from 0.01 to 2% by weight of a compound of the formula

$$R_1–K^+A^-$$

in which K denotes a group of the formula

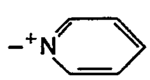 or $–N^+(R_2)_3$,

$R_2$ denotes $C_1$–$C_3$-alkyl, preferably methyl, A denotes an anion of the following formulae

$R_3$–$COO^-$ , $SCN^-$ , 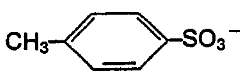

$R_3$ denotes $C_7$–$C_{10}$-alkyl or $C_7$–$C_{10}$-Alkenyl and $R_1$, if A = $R_3COO^-$, denotes $C_{16}$-alkyl or $C_{16}$-alkenyl, if A = thiocyanate, denotes $C_{16}$–$C_{26}$-alkyl or $C_{16}$–$C_{26}$-alkenyl and, if A = p-toluenesulfonate, denotes $C_{12}$–$C_{26}$-alkyl or $C_{12}$–$C_{26}$-alkenyl, except cetyltrimethylammonium-p-toluenesulfonate.

2. The process as claimed in claim 1, wherein, in addition, the solution is adjusted to a pH value of up to 4.5 or above 9 by adding acids or bases respectively.

3. The process as claimed in claim 1, wherein alkali metal, alkaline earth metal, transition metal, ammonium or aluminium salts are also added.

**Revendications**

1. Procédé pour abaisser la résistance de frottement de milieux aqueux en écoulement turbulent ou pulsatoire, procédé caractérisé en ce qu'on ajoute au milieu aqueux 0,01 à 2% en poids d'un composé de formule:

$$R_1–K^+A^-$$

dans laquelle K représente un groupe de formule

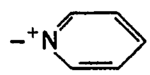 ou $–N^+(R_2)_3$,

$R_2$ représente un groupe alkyle en $C_1$–$C_3$, avantageusement un groupe méthyle, A représente un anion répondant aux formules suivantes:

$R_3$–$COO^-$ , $SCN^-$ , 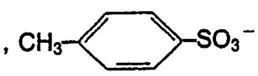

$R_3$ représente un groupe alkyle en $C_7$–$C_{10}$ ou alcényle en $C_7$–$C_{10}$ et, si A représente $R_3COO^-$, $R_1$ représente un groupe alkyle en $C_{16}$ ou alcényle en $C_{16}$ et, si A représente un groupe sulfocyanure, $R_1$ représente un groupe alkyle en $C_{16}$–$C_{26}$ ou alcényle en $C_{16}$–$C_{26}$ et, si A est un groupe p-toluènesulfonate, $R_1$ représente un groupe alkyle en $C_{12}$–$C_{26}$ ou alcényle en $C_{12}$–$C_{26}$, à l'exclusion du p-toluènesulfonate de cétyltriméthylammonium.

2. Procédé selon la revendication 1, caractérisé en ce que l'on ajuste en outre, par addition d'acides ou de bases, à un pH allant jusqu'à 4,5, ou supérieur à 9.

3. Procédé selon la revendication 1, caractérisé en ce qu'on ajoute en outre des sels alcalins, alcalino-terreux, de métaux de transition, d'ammonium ou d'aluminium.